# DEMANDE DE BREVET EUROPEEN

(11) **EP 4 546 581 A1**
(43) Date de publication de la demande: **30.04.2025**
(21) Numéro de dépôt: 24207609.9
(22) Date de dépôt: 18.10.2024
(51) Int. Cl.: H02G 1/12

(54) **INSTALLATION DE PRÉPARATION D'UN TRONÇON D'UN CÂBLE ÉLECTRIQUE**

(30) Priorité: 27.10.2023 FR 2311742
(71) Demandeur: Nexans, 92400 Courbevoie (FR)
(72) Inventeur: SESSOUC, François, 92400 Courbevoie (FR); LALLOUET, Nicolas, 92400 Courbevoie (FR)
(74) Mandataire: Cabinet Boettcher

(57) **Abrégé**

L'invention concerne une installation (101) de préparation d'un câble (1) comportant un conducteur entouré par un système d'isolation (2) comprenant au moins une couche isolante (3) et au moins une couche semiconductrice externe (5). Selon l'invention, l'installation possède un dispositif de refroidissement (101) d'un tronçon dudit câble (1) sous la forme d'un boitier cylindrique (102) de refroidissement contenant de glace carbonique, le câble électrique (1) traversant le boitier (102) en vue d'être refroidi en dessous de la température de transition vitreuse de la couche semiconductrice externe (5) et permettre à la suite un usinage de la couche semiconductrice externe (5).

## Description

La présente invention concerne une installation de préparation d'un tronçon d'un câble électrique, ce tronçon est par exemple d'une longueur de 1 m à 1,5 m.

Pour la suite de la description, les termes « câble » et « câble électrique » sont équivalents.

Généralement, un câble électrique comprend un conducteur électrique entouré par un système d'isolation pouvant comporter au moins une couche d'isolant électrique et une couche de semiconducteur. Un tel câble électrique est généralement amené à venir s'enficher dans un connecteur électrique afin d'assurer une alimentation en électricité d'un bâtiment, d'une pièce, d'un équipement ou une transmission de l'électricité dans une partie du réseau. Afin d'assurer cette connexion, au moins une partie du système d'isolation dudit câble doit être retirée, en particulier sur le tronçon de celui-ci qui est destiné à venir interagir directement avec le connecteur électrique. Afin de réaliser ce retrait de matière, un dispositif de découpe impliquant une lame coupante est utilisé, ladite lame réalisant le découpage de la partie du système d'isolation à retirer.

Or, il s'avère que certains matériaux constitutifs de la couche isolante et de la couche semiconductrice sont trop mous et/ou trop élastiques, pour subir une telle opération de découpe propre. En effet, lors de cette opération de découpe ces matériaux vont d'abord se déformer au contact de la lame coupante, puis, lorsqu'ils vont être coupés, ils vont présenter un bord d'extrémité issu de cette découpe, qui ne sera pas lisse et donc bien défini, pouvant avoir des répercussions néfastes sur les propriétés dudit câble.

Une installation selon l'invention est conçue pour placer le système d'isolation du câble dans des conditions optimisées, afin de pouvoir réaliser des opérations de modification structurelle dudit câble, qui soient parfaitement maitrisées.

L'invention a pour objet une installation de préparation d'un câble comportant un conducteur entouré par un système d'isolation comprenant au moins une couche isolante et au moins une couche semiconductrice.

Selon l'invention, l'installation possède un dispositif de refroidissement d'un tronçon dudit câble sous la forme d'un boitier cylindrique de refroidissement délimité par une paroi latérale cylindrique et par deux faces d'extrémité circulaires, dotées chacune d'une ouverture circulaire, la paroi latérale cylindrique possédant au moins un orifice d'alimentation par lequel est introduit dans le boitier un matériau réfrigérant, le câble électrique traversant le boitier en passant par les ouvertures circulaires des deux faces d'extrémité et étant au contact du matériau réfrigérant placé dans le boitier cylindrique. Le boîtier cylindrique peut être de section transversale circulaire, mais également rectangulaire. Afin de lever toute ambiguïté, le câble électrique et le matériau réfrigérant font bien partie de l'installation et ne constituent pas des éléments extérieurs à celle-ci. Une installation selon l'invention permet donc de refroidir le câble doté de son système d'isolation périphérique afin de durcir la couche de semiconducteur et la couche d'isolant du câble. De cette manière, il devient possible de se livrer par exemple à des opérations de découpe desdites au moins deux couches, afin de préparer le câble dans des conditions optimisées, avec notamment un aspect lisse maitrisé de la découpe, pour qu'il puisse venir s'enficher dans un connecteur électrique extérieur. Le boitier cylindrique de refroidissement est conçu pour entourer un tronçon du câble électrique, afin que ledit tronçon se refroidisse au contact du matériau réfrigérant. Si une opération de découpe du système d'isolation du câble doit avoir lieu, elle s'effectuera sur ledit tronçon refroidi. Le matériau réfrigérant peut indifféremment se présenter sous forme liquide, ou solide ou de gel. Le refroidissement du câble dans le boitier de refroidissement peut s'effectuer, soit directement par contact avec le matériau réfrigérant, soit indirectement au moyen d'une paroi cylindrique entourant le câble et ayant des propriétés de conduction thermique. Cette paroi conductrice serait d'un côté en contact avec le matériau réfrigérant, et de l'autre côté en contact avec le câble. Préférentiellement, le câble électrique passe par les deux ouvertures circulaires des deux faces d'extrémité sans créer de jeu avec le bord desdites parois d'extrémité délimitant lesdites ouvertures. De cette manière, l'espace interne délimité par le boitier cylindrique de refroidissement et dans lequel est placé le matériau réfrigérant sera bien isolé thermiquement. Préférentiellement, une fois que le matériau réfrigérant aura été introduit dans le boitier cylindrique de refroidissement, un bouchon pourra être introduit dans l'orifice d'alimentation dudit boitier afin de mieux isoler thermiquement l'espace interne délimité par ledit boitier de refroidissement. Avantageusement, le boitier cylindrique est placé dans l'installation de sorte que son axe de révolution s'étende horizontalement. Pour cette configuration, le matériau réfrigérant présent dans ledit boitier s'étend sur une hauteur qui est supérieure à un rayon dudit boitier, et en particulier de manière à recouvrir au moins partiellement, et encore mieux totalement, sur toute sa circonférence, le câble qui est maintenu à distance du fond du boîtier.

Selon une caractéristique possible de l'invention, le boitier cylindrique est réalisé dans un matériau ou un ensemble de matériaux isolant thermique, de façon que le matériau réfrigérant ne refroidisse que le câble et que le réfrigérant ne se réchauffe pas rapidement pour ne pas perdre son efficacité. Cette isolation permet d'augmenter l'efficience de l'installation, afin de permettre successivement la préparation de plusieurs tronçons de câble électrique. Un autre avantage de cette isolation thermique de l'installation est de protéger les opérateurs des brulures par le froid. Le matériau du boitier de refroidissement peut par exemple être réalisé en PVC, et préférentiellement cette couche de PVC peut elle-même être thermiquement isolée par une couche de mousse expansée de polyuréthane entourant la couche de PVC. Alternativement, le boîtier peut être formé en polystyrène et avoir une section transversale rectangulaire, et être pourvu d'un unique couvercle amovible. Préférentiellement, le matériau réfrigérant va abaisser la température du câble par conduction thermique.

Selon une caractéristique possible de l'invention, le boitier cylindrique possède au moins deux, et par exemple trois orifices d'alimentation par lesquels est introduit le matériau réfrigérant. Lesdits trois orifices d'alimentation sont placés le long d'une zone supérieure du boitier cylindrique en étant alignés le long d'un axe longitudinal de ce boitier. Pour cette configuration, il est supposé que le boitier cylindrique de refroidissement est orienté dans l'espace de sorte que son axe de révolution s'étende horizontalement. Les trois orifices d'alimentation sont équitablement répartis le long du boitier cylindrique afin que le matériau réfrigérant puisse occuper de façon homogène l'espace interne délimité par le boitier de refroidissement et ainsi assurer un refroidissement équilibré du câble le long de son axe longitudinal. La distance entre les orifices est prévue de manière à assurer une répartition du matériau réfrigérant de manière à ce qu'il se répartisse sur la longueur du boîtier, le long du câble. Une fois que le matériau réfrigérant a été introduit dans le boitier cylindrique de refroidissement, les trois orifices d'alimentation peuvent être obturés par des bouchons afin d'isoler thermiquement l'espace interne délimité par ce boitier de refroidissement.

Selon une caractéristique possible de l'invention, les deux faces d'extrémité sont planes et parallèles entre elles.

Selon une caractéristique possible de l'invention, les ouvertures circulaires des deux faces d'extrémité, assurant l'introduction et le placement du câble dans le boitier, occupent chacune une position centrale sur la face d'extrémité correspondante. De cette manière, la paroi latérale cylindrique du boitier de refroidissement et le système d'isolation du câble sont coaxiaux, ménageant entre eux un espace de largeur constante, qui est au moins partiellement rempli par le matériau réfrigérant, la présence de cet espace constant assurant un refroidissement homogène du tronçon de câble inséré dans le boitier de refroidissement.

Selon une caractéristique possible de l'invention, le matériau réfrigérant est constitué par une pluralité de morceaux de glace carbonique. Les morceaux de glace sont faciles à produire et sont donc peu coûteux. Ils permettent également d'abaisser efficacement la température du système d'isolation du câble. Ces morceaux de glace sont placés dans le boitier de refroidissement en vrac, c'est-à-dire sans ordonnancement particulier. La glace carbonique ou neige carbonique est par exemple à une température comprise entre -60°C et -80°C, et en particulier de l'ordre de -78°C. L'avantage de la glace carbonique est qu'elle ne laisse aucun résidu aqueux en s'évaporant à température ambiante.

Selon une caractéristique possible de l'invention, les morceaux de glace ont tous un calibre sensiblement identique au moment de leur introduction. En particulier, les morceaux se présentent sous la forme de bâtonnets cylindriques de section circulaires de diamètre compris entre 1 et 25 mm et de longueur comprise entre 0.5 et 10 cm. De cette manière, avec des morceaux de glace standards, la répartition des morceaux de glace sera homogène dans le boitier de refroidissement, permettant d'assurer un refroidissement équilibré du câble dans ledit boitier de refroidissement. Si les morceaux de glace avaient des profils très différents, des zones creuses sans morceaux de glace seraient créées dans le boitier de refroidissement et altéreraient les conditions de refroidissement du câble dans le boitier de refroidissement.

La taille des morceaux est optimisée pour d'une part éviter la fuite de ces morceaux au niveau d'un espace entre le câble et les ouvertures circulaires prévues dans les faces latérales du boîtier, et d'autre part faciliter leur répartition fluide dans le boîtier au moment de leur introduction.

Selon une caractéristique possible de l'invention, le système d'isolation du câble inclut une couche d'isolation entourée par une couche interne de semiconducteur et par une couche externe de semiconducteur. La couche d'isolation est donc insérée entre la couche interne et la couche externe de semiconducteur.

Selon une caractéristique possible de l'invention, l'installation comprend un dispositif de découpe de la couche externe de semiconducteur et de la couche d'isolation afin de préparer un tronçon du câble électrique, le dispositif de découpe comportant une lame coupante et étant utilisé après que ladite couche externe de semiconducteur et ladite couche d'isolation ait été portées à une température inférieure à leur température de transition vitreuse. L'opération de découpe intervient après que la couche externe de semiconducteur et la couche d'isolation aient été portées à une température qui est inférieure à leur température de transition vitreuse. Ces couches auront donc été durcies avant que ne commence l'opération de découpe.

Selon une caractéristique possible de l'invention, l'installation comprend une unité commune à l'intérieur duquel sont fixés le dispositif de refroidissement et le dispositif de découpe, ladite unité commune étant montée mobile le long du câble électrique. Pour cette configuration, le dispositif de refroidissement et le dispositif de découpe sont rassemblés dans une unité commune, qui est montée mobile le long du câble. La possibilité de déplacer cette unité commune le long du câble rend une installation selon l'invention plus souple d'utilisation en permettant le traitement d'un tronçon plus ou moins long du câble ou de plusieurs tronçons séparés dudit câble, et rend l'opération de refroidissement et l'opération de découpe indissociables l'une de l'autre.

L'invention a pour autre objet un procédé de préparation d'un câble électrique à partir d'une installation selon l'invention.

Selon l'invention, le procédé comprend les étapes suivantes :
--une étape de fixation du boitier de refroidissement autour du tronçon de câble électrique à refroidir,

- une étape de remplissage du boitier de refroidissement par les orifices d'alimentation avec le matériau réfrigérant,
- une étape de refroidissement dudit tronçon du câble électrique au moyen du boitier cylindrique de refroidissement,
- une étape de découpe de la couche externe de semiconducteur du câble au moyen de la lame coupante, après que ladite couche externe de semiconducteur et ladite couche d'isolation aient été portées à une température inférieure à leur température de transition vitreuse grâce au dispositif de refroidissement.

Le procédé selon l'invention a pour objectif de retirer l'intégralité de la couche externe de semiconducteur, en enlevant le moins possible de la couche d'isolant adjacente et interne à cette couche externe de semiconducteur. L'objectif de l'invention est d'enlever une partie seulement de la couche isolante, dans une proportion comprise par exemple entre 0 et 15% de son épaisseur radiale, par exemple de l'ordre de 0.5 mm. C'est pourquoi la durée de refroidissement du câble doit permettre un refroidissement en profondeur du câble de manière à ce que le gradient thermique observé dans le câble permette à l'intégralité de la couche externe de semiconducteur et à la couche d'isolation d'être à une température inférieure à leur température de transition vitreuse respective avant usinage.

Ce procédé peut être compléter par une étape d'obturation des orifices d'alimentation avec des bouchons une fois que le matériau réfrigérant a été introduit dans le boitier de refroidissement.

Selon une caractéristique possible de l'invention, le procédé comprend une étape de déplacement d'une unité commune le long du câble électrique afin de préparer de proche en proche un tronçon dudit câble électrique.

Une installation selon l'invention présente l'avantage de posséder un dispositif de refroidissement judicieux, dont la géométrie est adaptée à celle d'un câble à refroidir pour assurer un refroidissement homogène d'un tronçon de celui-ci, et dont les dimensions sont réduites pour ne pas encombrer ladite installation. Ce dispositif de refroidissement a de plus l'avantage d'impliquer un matériau réfrigérant qui est peu coûteux et qui est parfaitement efficace pour engendrer un refroidissement performant du câble.

On donne ci-après une description détaillée d'un mode de réalisation préféré d'une installation de préparation d'un câble selon l'invention en se référant aux figures suivantes :
[Fig. 1] La figure 1 est une vue de côté d'une installation selon l'invention, montrant un câble et un dispositif de refroidissement
[Fig. 2] La figure 2 est une vue de face de plusieurs morceaux de glace constituant le matériau réfrigérant d'un dispositif de refroidissement d'une installation selon l'invention,
[Fig. 3] La figure 3 est la vue de côté de la figure 1 montrant par transparence le matériau réfrigérant dans le dispositif de refroidissement,
[Fig. 4] La figure 4 est vue en perspective d'un tronçon de câble et d'un dispositif de découpe d'une installation selon l'invention,
[Fig. 5] La figure 5 est une de face d'un câble qui a été préparé au moyen d'une installation selon l'invention,
[Fig. 6] La figure 6 est une vue en section transversale du câble dans le boîtier sous une épaisseur de réfrigérant selon l'invention.

Certains câble électriques 1 possédant un conducteur entouré par un système d'isolation électrique 2, ont besoin d'être préparés avant de pouvoir être insérés dans des connecteurs électriques extérieurs, afin d'assurer une alimentation électrique d'une structure pouvant par exemple être un bâtiment, un véhicule ou un appareillage électrique. De façon schématique, cette préparation consiste à couper une partie du système d'isolation 2 du câble 1 afin de dénuder ledit câble 1 sur un tronçon ayant une longueur prédéfinie. Puisque certaines couches du système d'isolation 2 du câble 1 sont réalisées dans des matériaux mous présentant une certaine élasticité, une coupe propre de ces couches peut s'avérer compliquée à réaliser. En effet, lors de cette opération de coupe, les couches concernées du système d'isolation 2 vont d'abord être déformées avant d'être coupées. Il en résulte que le bord d'extrémité 15 d'au moins l'une de ces couches ainsi que la surface de l'isolant 3 obtenu à l'issue de cette coupe ne seront ni régulier, ni lisse, risquant de biaiser les propriétés du câble 1 électrique.

Il a été observé qu'un refroidissement préalable des couches du système d'isolation 2 du câble 1 permettait de durcir ces couches et donc de faciliter leur coupe, au moment de la préparation d'un tronçon du câble 1.

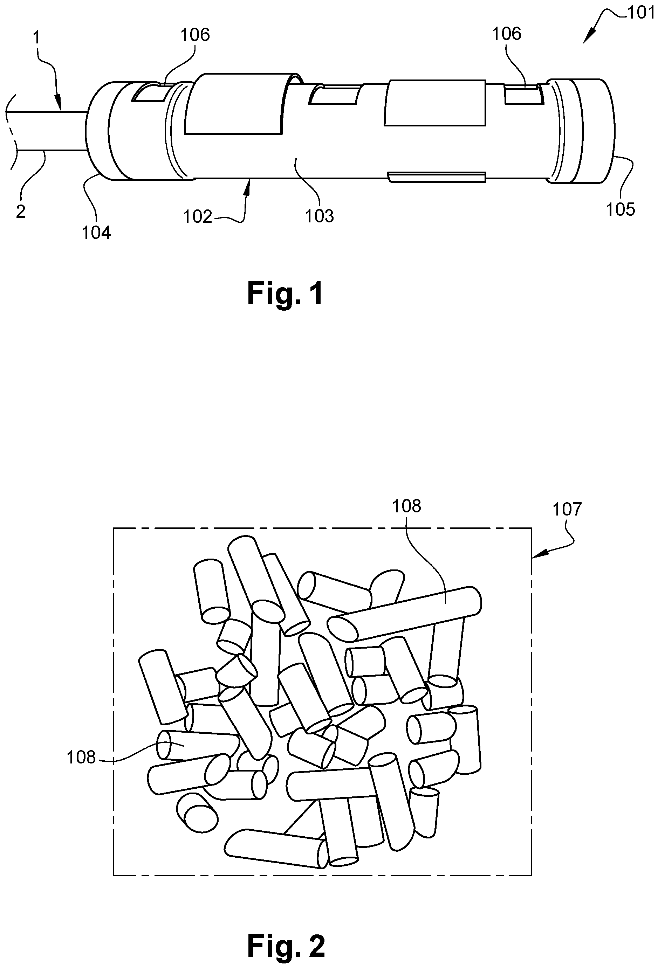

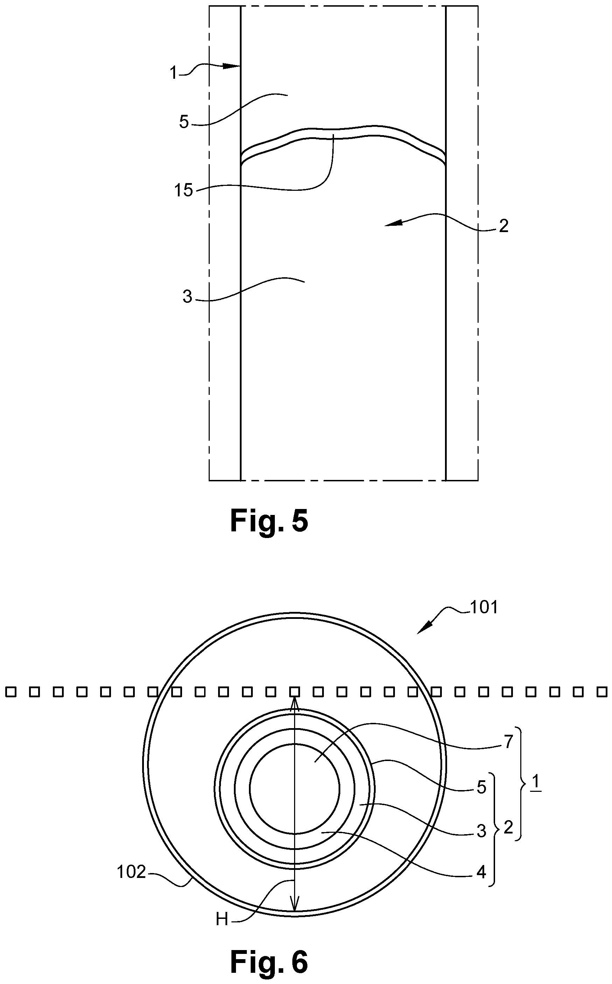

En se référant aux figures 1, 3, 4 et 5, une installation 101 selon l'invention comprend un câble 1 et un dispositif de refroidissement 101 dudit câble 1. Le câble 1 comprend un conducteur 7 entouré par un système d'isolation 2 comprenant une couche d'isolation 3, une couche interne de semiconducteur et une couche externe 5 de semiconducteur, ladite couche d'isolation 3 étant comprise entre ladite couche interne 4 et ladite couche externe 5. Le câble 1 comprenant le conducteur 7 et le système d'isolation 2 possède une section transversale circulaire.

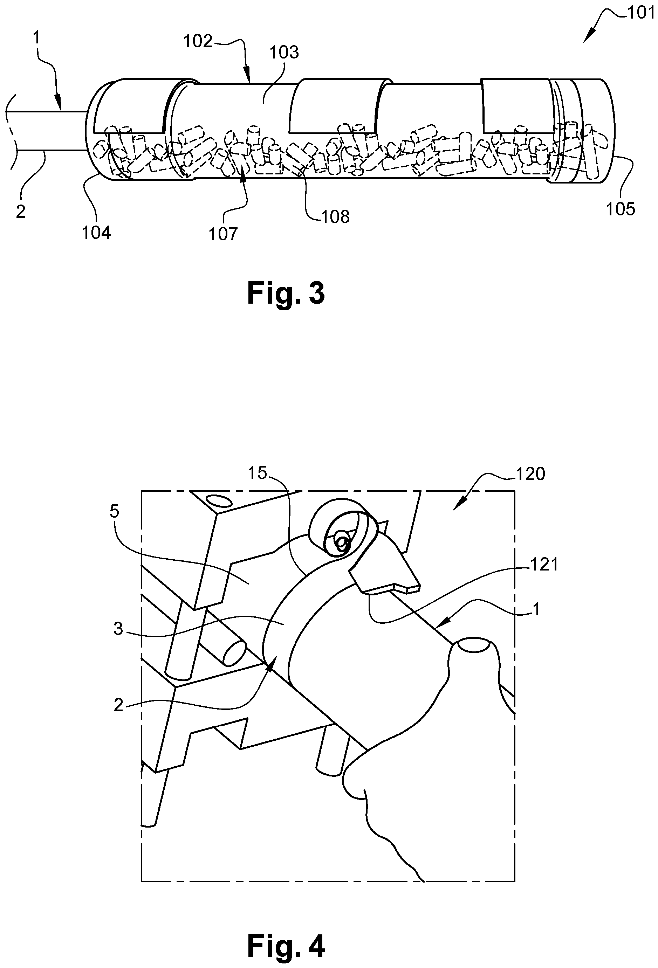

Le dispositif de refroidissement 101 comprend un boitier de refroidissement 102 de forme cylindrique réalisé en PVC. Ce boitier de refroidissement 102 est délimité par une paroi latérale cylindrique103 et par deux faces d'extrémité 104, 105 de forme circulaire et possédant chacune une ouverture centrale. Ces deux faces d'extrémité 104, 105 sont parallèles entre elles et s'étendent chacune dans un plan qui est perpendiculaire à un axe de révolution de la paroi latérale cylindrique 103. Les ouvertures centrales des deux parois d'extrémité 104, 105 sont circulaires en ayant le même diamètre, qui est supérieur ou égal au diamètre extérieur du câble 1. Le boitier cylindrique de refroidissement 102 est placé autour du câble 1 de sorte que ledit câble 1 passe par les ouvertures centrales des deux parois d'extrémité 104, 105. La paroi latérale cylindrique 103 du boitier de refroidissement 102 comprend des orifices d'alimentation 106 par lesquels est introduit un matériau réfrigérant 107 à l'intérieur dudit boitier de refroidissement 102. Ces orifices d'alimentation 106 sont répartis de façon homogène le long du boitier de refroidissement 102, de façon que le matériau réfrigérant 107 soit répandu de façon équilibrée le long dudit boitier de refroidissement 102. En se référant aux figures 2 et 3, ce matériau réfrigérant 107 est constitué d'une pluralité de morceaux 108 de glace carbonique. Avantageusement, ces morceaux 108 de glace apparaissent préférentiellement sous la forme de bâtonnets ayant tous à peu près la même géométrie et les mêmes dimensions. De cette manière, en étant tous quasiment identiques, les bâtonnets de glace 108 vont se mélanger de façon étroite dans le boitier cylindrique de refroidissement 102, sans laisser subsister de zones dépourvues de bâtonnets 108 de glace. Dans l'installation 101, le câble 1 s'étend horizontalement de sorte que l'axe de révolution du boitier de refroidissement 102 qui est placé autour dudit câble 1, s'étende également horizontalement. Ces bâtonnets de glace 108 sont déversés dans le boitier de refroidissement 102 par les orifices d'alimentation1 06 jusqu'à ce qu'ils atteignent une hauteur H qui est supérieure à la moitié de la hauteur du boitier de refroidissement 102. Le réfrigérant est ajouté jusqu'à recouvrir le câble. De cette manière, le câble 1, et plus exactement la couche externe 5 de semiconducteur du système d'isolation 2, est en contact direct avec les bâtonnets 108 de glace placés dans le boitier de refroidissement 102. Une fois que les bâtonnets de glace 108 ont été introduits dans le boitier de refroidissement 102, les orifices d'alimentation 106 sont chacun obturés par un bouchon, de manière à isoler thermiquement l'espace interne délimité par le boitier de refroidissement 102. Grâce à la présence du matériau réfrigérant 107 dans le boitier de refroidissement 102, les couches 3 et 5 du système d'isolation 2 du câble 1 sont portées à des températures qui sont inférieures à leurs températures de transition vitreuse. En étant portées à de telles températures aussi faibles, les différentes couches 3 et 5 du système d'isolation 2 du câble 1 durcissent et peuvent ainsi être mieux usinées lors de la préparation d'un tronçon du câble 1, cette préparation consistant à retirer au moins une partie du système d'isolation 2 sur un tronçon dudit câble 1.

En se référant à la figure 4, une installation 101 selon l'invention comprend un dispositif de découpe 120 du câble comportant une lame coupante 121, ledit dispositif de découpe 120 servant à préparer le câble 1. De façon schématique, cette lame coupante 121 est inclinée par rapport à une surface externe du système d'isolation 2 du câble 1. Elle se déplace le long de la périphérie dudit système d'isolation 2 en découpant progressivement les couches 3 et 5 constitutives dudit système d'isolation 2 pour obtenir un tronçon de câble 1 qui soit dépourvu d'au moins une partie du système d'isolation 2. Ce dispositif de découpe 120 étant par ailleurs déjà connu, il ne sera pas décrit plus en détails dans la présente description. Lorsque les couches 3 et 5 du système d'isolation ont été préalablement refroidies par le dispositif de refroidissement 101, elles ont durci et peuvent donc être coupées facilement et proprement en présentant un bord de coupe 15 net et parfaitement défini et un aspect de surface lisse de l'isolant 2 après découpe.

Un procédé de préparation d'un câble électrique à partir d'une installation selon l'invention comprend les étapes suivantes :
- une étape de fixation du boitier de refroidissement 102 autour du tronçon de câble 1 électrique à refroidir,
- une étape de remplissage du boitier de refroidissement 102 à travers les orifices d'alimentation 106 avec le matériau réfrigérant 107 sous forme de morceaux de glace 108,
- une étape d'obturation desdits orifices d'alimentation 106,
- une étape de refroidissement dudit tronçon du câble 1 électrique au moyen du boitier cylindrique 102 de refroidissement,
- une étape de découpe de la couche externe 5 de semiconducteur et de la couche d'isolation 3 du câble 1 au moyen de la lame coupante 121, après que ladite couche externe 5 de semiconducteur et ladite couche d'isolation 3 aient été portées à une température inférieure à leur température de transition vitreuse grâce au dispositif de refroidissement 101.

Selon une variante de réalisation préférée d'une installation 101 selon l'invention, le dispositif de refroidissement 101 qui est principalement représenté par le boitier de refroidissement 102, et le dispositif de découpe 120 sont fixés à l'intérieur d'une unité commune qui peut se déplacer en translation le long du câble 1 à préparer. De cette manière, les fonctions de refroidissement et de découpe du câble 1 deviennent indissociables, l'étape de découpe ne pouvant intervenir que lorsque le tronçon du câble 1 à traiter a été préalablement refroidi. Le fait de fixer le dispositif de refroidissement 101 et le dispositif de découpe 120 à une même unité commune, permet de regrouper les fonctions de refroidissement et de découpe du câble en même lieu avec pour conséquences :
- un risque moins élevé d'éparpiller les éléments nécessaires à la réalisation de ces deux fonctions et donc de perdre lesdits éléments,
- une élimination du risque d'oublier de refroidir le câble 1 avant de procéder à sa découpe.

## Revendications

1. Installation (101) de préparation d'un câble (1) comportant un conducteur entouré par un système d'isolation (2) comprenant au moins une couche isolante (3) et au moins une couche semiconductrice (5), **caractérisée en ce qu'**elle possède un dispositif de refroidissement (101) d'un tronçon dudit câble (1) sous la forme d'un boitier cylindrique (102) de refroidissement délimité par une paroi latérale (103) cylindrique et par deux faces d'extrémité (104, 105) circulaires, dotées chacune d'une ouverture circulaire, et **en ce que** la paroi latérale cylindrique (103) possède au moins un orifice d'alimentation (106) par lequel est introduit dans le boitier (102) un matériau réfrigérant (107, 108), le câble électrique (1) traversant le boitier (102) en passant par les ouvertures circulaires des deux faces d'extrémité (104, 105) et étant au contact du matériau réfrigérant (107, 108) placé dans le boitier cylindrique (102).

2. Installation selon la revendication 1, **caractérisée en ce que** le boitier cylindrique (102) est réalisé dans un matériau isolant thermique.

3. Installation selon l'une quelconque des revendications 1 ou 2, **caractérisée en ce que** le boitier cylindrique (102) possède au moins deux orifices d'alimentation (106) par lesquels est introduit le matériau réfrigérant (107, 108), et **en ce que** lesdits au moins deux orifices d'alimentation (106) sont placés le long d'une zone supérieure du boitier cylindrique (102) en étant alignés le long d'un axe longitudinal de ce boitier (102).

4. Installation selon l'une quelconque des revendications 1 à 3, **caractérisée en ce que** les deux faces d'extrémité (104, 105) sont planes et parallèles entre elles.

5. Installation selon la revendication 4, **caractérisé en ce que** les ouvertures circulaires des deux faces d'extrémité (104, 105) occupent chacune une position centrale sur la face d'extrémité (104, 105) correspondante.

6. Installation selon l'une quelconque des revendications 1 à 5, **caractérisé en ce que** le matériau réfrigérant (107) est constitué par une pluralité de morceaux de glace carbonique (108), en particulier des morceaux à une température de l'ordre de -60°C à -78°C au moment de leur introduction dans le boîtier.

7. Installation selon la revendication 6, **caractérisée en ce que** les morceaux de glace (108) ont tous une géométrique et des dimensions identiques.

8. Installation selon l'une quelconque des revendications 1 à 7, **caractérisé en ce que** le système d'isolation (2) du câble inclut une couche d'isolation (3) entourée par une couche interne de semiconducteur et par une couche externe (5) de semiconducteur.

9. Installation selon la revendication 8, **caractérisé en ce qu'**il comprend un dispositif de découpe (120) de la couche externe (5) de semiconducteur et de la couche d'isolation (3) afin de préparer un tronçon du câble (1) électrique, et **en ce que** le dispositif de découpe (120) comporte une lame coupante (121) et est utilisé après que ladite couche externe (5) de semiconducteur et ladite couche d'isolation (3) ait été portées à une température inférieure à leur température de transition vitreuse grâce au réfrigérant, la température de transition vitreuse étant en particulier comprise entre -10°C et -50°C.

10. Installation selon la revendication 9, **caractérisé en ce qu'**elle comprend une unité commune à l'intérieur duquel sont fixés le dispositif de refroidissement (101) et le dispositif de découpe (120), ladite unité commune étant montée mobile le long du câble électrique (1) suivant son axe.

11. Procédé de préparation d'un câble électrique (1) à partir d'une installation selon l'une quelconque des revendications 9 ou 10, **caractérisé en ce qu'**il comprend les étapes suivantes :
- une étape de fixation du boitier de refroidissement (102) autour d'une partie au moins du tronçon de câble (1) électrique à préparer,
- une étape de remplissage du boitier de refroidissement (102) par les orifices d'alimentation (106) avec le matériau réfrigérant (107, 108),
- une étape de refroidissement de ladite partie dudit tronçon du câble électrique (1) au moyen du boitier cylindrique (102) de refroidissement, de manière à refroidir la couche externe (5) de semiconducteur et ladite couche d'isolation (3) en dessous de leur température de transition vitreuse respective,
- une étape de découpe de la couche externe (5) de semiconducteur et d'une partie de la couche d'isolation (3) de ladite partie dudit tronçon de câble au moyen de la lame coupante (121), après que ladite couche externe (5) de semiconducteur et ladite couche d'isolation (3) aient été portées à une température inférieure à leur température de transition vitreuse respective grâce au dispositif de refroidissement (101).

12. Procédé selon la revendication 11, **caractérisé en ce qu'**il comprend une étape de déplacement de l'unité commune le long du câble électrique (1) afin de préparer de proche en proche des parties successives dudit tronçon dudit câble électrique (1).
